# EUROPEAN PATENT APPLICATION

(11) **EP 3 603 791 A1**
(43) Date of publication of application: **05.02.2020**
(21) Application number: 18772428.1
(22) Date of filing: 19.03.2018
(51) Int. Cl.: B01J 8/24

(54) **SOURCE CONFINEMENT MEANS FOR CONTACTOR OF FLUIDISED BED, AND CONTACTOR OF FLUIDISED BED**

(30) Priority: 21.03.2017 ES 201730388
(71) Applicant: Universidad del País Vasco/Euskal Herriko Unibertsitatea, 48940 Leioa, Vizcaya (ES)
(72) Inventor: ALTZIBAR MANTEROLA, Haritz, 48940 Leioa - Vizcaya (ES); PABLOS CASTRO, Aitor, 48940 Leioa - Vizcaya (ES); OLAZAR AURRECOECHEA, Martin, 48940 Leioa - Vizcaya (ES); AGUADO ZARRAGA, Roberto, 48940 Leioa - Vizcaya (ES); BILBAO ELORRIAGA, Javier, 48940 Leioa - Vizcaya (ES); VICENTE PEÑALOSA, Jorge, 48940 Leioa - Vizcaya (ES); VARONA LOPEZ, Eduardo, 48940 Leioa - Vizcaya (ES)
(74) Representative: Balder IP Law, S.L.
(86) International application number: PCT/ES2018/070206
(87) International publication number: WO 2018/172582

(57) **Abstract**

The invention relates to a source (4) confinement means (1) for a contactor (2) of a fluidised bed (3) and to a contactor of a fluidised bed comprising: a particle bed (3); an inlet (21) for gas for the treatment of the particles; an outlet (22) for the gas after the treatment of the particles; a contact chamber (23) for permitting contact between the gas and the particles. The confinement means (1) comprises: a peripheral wall (12) to form a cavity (11) inside the contact chamber (23), which has an opening (13) facing the inlet (21) and the bed (3), in order to direct an inlet and outlet of gas and particles via the opening (13), with the inlet for gas and particles into the cavity (11) being in an ascending direction, and the outlet for gas and particles out of the cavity (11) being in a descending direction.

## Description

### Field of the invention

The invention relates to a device to improve the performance of a contactor of a fluidised bed, with the device being located inside a contact chamber of the contactor. This device is a source confinement means. The invention also relates to the contactor of a fluidised bed equipped with a source confinement means. Since the technology of contactors of fluidised beds has multiple applications within the scope of chemical engineering (drying, pyrolysis, gasification, combustion, mixing, polymerisation and particle coating, among others), the invention may cover sectors as varied as the chemical, food, energy, mining, environmental and ceramic sectors, among others.

### Background of the invention

Processes in which fine and ultrafine solids in the form of particles are handled and that require heat and material exchange are currently carried out with widely established technologies such as trommels, tray ovens and with fixed and fluidised beds. Although drying and/or combustion systems based on fixed beds are known, the fluidised bed is generally accepted to be more efficient. A fluidised bed basically consists of a container (usually cylindrical) with a plate with holes installed on the base, through which gas enters in an upward stream, causing fluidisation (slight levitation and agitation) of the particles contained in the contact chamber. In general, fluidised bed technology requires solids with a narrow particle size distribution, that is, with very similar particle sizes, and with a density and morphology that allows their fluidisation. Regarding particle size in the invention, a simplification can be made by considering that the particles in the bed are spherical, although they really are not. Consequently, to take into account the geometry of the particles, a sphericity value can be established, defined as the ratio between the surface area of a sphere with an equal volume to the particle and the surface area of the particle. This sphericity value is an indicator that quantifies how spherical a particle is; for example, for particles like sand, coal and iron, sphericity is commonly assumed to usually fall within the range between 0.5 and 0.9. Consequently, when discussing particle size in the invention, a parameter corresponding to the diameter of a spherical particle is considered as a reference measure.

In the case of materials that do not fluidise, inert beds, usually sand, are generally used and act as a coadjuvant to fluidisation. Also, one way to increase the efficiency of physical and chemical operations is to use contact methods that ensure a high degree of turbulence with the minimum amount of fluid. One of the technologies that has proven to perform best is the spouted bed contact system, In the so-called spouted bed, unlike the plate with holes of the fluidised bed, a diaphragm is used, so that the fluid enters the contact chamber of the contactor through a single central orifice and a cylindrical cavity or channel opens (commonly referred to as spout) through which the fluid ascends, which is usually gas and, in many cases, air. Going into greater detail, the spouted bed is solid fluidisation system in which a gas is introduced into the bed through an orifice with a diameter smaller than the diameter of the contactor base and it opens a cylindrical cavity or spout that penetrates towards the surface of the bed oriented towards the interior of the contact chamber of the contactor. In this spouted bed configuration, the granular solid in the form of particles, follows paths that comprise a downward region in the annular zone of the bed that surrounds the channel and an upward region in the channel zone, where the granular solid in the form of particles is propelled by the gas. There is also a portion of the gas that ascends through the annular zone that surrounds the spout, through which the granular solid or particles descend. The particles are driven by the gas that ascends in the spout along the wall of the spout. These particles leave the upper region of the bed, creating a source and generating a movement in the contactor that distributes the particles on the surface of the bed, finally becoming part of the descending annular bed.

Initially, spouted beds were used in the drying of cereal grains with a high degree of moisture, for which the traditional fluidised bed method was totally inoperative. The first commercial units were installed in Canada in 1962 for drying peas, lentils and linseed. Since then, its most common application has been for drying granular solids, especially those that are sensitive to temperature, such as agricultural products, wood shavings, polymer materials and grains of ammonium nitrate or manganese chloride. Drying equipment for a wide range of products was later built all over the world, including drying processes by evaporation of solutions, suspensions and pastes on inert particles.

While the range of moisture and drying conditions used both in the laboratory and commercially is very broad, it has been observed that in all cases there is a thermal gap between the temperature of the intake air and the temperature of the bed. This feature of spouted beds provides its greatest advantage over conventional dryers, in which the absence of this thermal gap makes it necessary to use lower inlet temperatures to avoid thermal deterioration of temperature-sensitive materials. This peculiarity of spouted beds is attributed to the countercurrent contact between the gas ascending through the spout and the particles descending through the annular zone.

US3385199 describes a device for contact between fluids and solids in the form of particles, wherein solids are continuously circulated by fluid streams of the fluid, with the particles moving upwards in the central portion of a container, and migrating downwards in the peripheral portion of the container.

US20150141589 describes a polymerisation reactor that comprises a tubular vessel extending in the vertical direction. The reactor has a bottom with a decreasing internal diameter in the descending direction and a vertical orifice in the centre of the bottom. It also has a lower tubular deflector over the hole, with the outer diameter of the lower tubular deflector increasing in the descending direction, and with the lower tubular deflector equipped with a hole at an upper end. In addition, it has an upper deflector above the hole in the lower deflector, where the outer diameter of the upper deflector increases in the descending direction, with the upper end of the upper deflector closed, with the lower end of the upper deflector at a distance from the inner wall of the tubular vessel, where the outer diameter at the bottom of the upper deflector is greater than or equal to an inner diameter of the orifice in the lower deflector.

The installations based on spouted bed technology that have achieved the greatest commercial development are those that involve physical operations, such as drying grain, granulation of fertilisers (due to the recirculation of solid in the contactor, a highly uniform sizes and a high sphericity of the product is obtained) and coating of solids. Even so, this technology has also been successfully tested for a wide variety of chemical processes, including pyrolysis of plastics, tires and biomass, biomass gasification, biomass cracking, cement production and thermal cracking of heavy refinery flows.

The application of spouted bed technology is limited by the features of the solid, because certain phenomena that impede the operation may appear. Some of these limitations are summarised below:
- The stability of the process (understood as the stability of the operating parameters, mainly the pressure drop in the gas flow that occurs when the gas passes through the bed and the required gas flow), is seriously affected when the processed material is smaller than 1 mm, when working with wide size distributions and when the height of the bed or the flow of gas or air is increased. In these cases, phenomena such as bubbling or slugging appear, which cause abrupt changes in process values and result in poor quality contact. Currently, the use of internal devices with central tubes achieves stable operation in some cases, although these devices favour the entrainment of fine particles due to the speed with which they leave the bed.
- Segregation, which is a phenomenon by which there is a separation or distribution of particles by their size. In the spouted bed, there is a characteristic annular segregation, according to which the finer particles are thrown to the periphery of the surface and the coarser ones follow a smaller parabola in the jet to position themselves in the more central zone, so a radial particle-size gradient appears in the bed. This creates a problem when working continuously with materials with different particle sizes, as only the finest particles come out of the bed (usually through overflow type outlets) while the coarser particles concentrate in the bed.
- Entrainment of particles, because a minimum flow is required to achieve bed movement, that depends on factors such as bed height or gas inlet diameter. Below this minimum flow value, the source collapses and the bed stops. When working with fine particles or materials with a broad distribution of particle sizes, the minimum flow required to ensure the spouted bed regime can generate internal streams with sufficient velocity to carry away the finer particles, significantly limiting the application of this technology. To expand the scope of this technology and overcome this limitation, plates or deflectors are normally positioned over the source at the gas outlet, so that the fine particles that are entrained by the gas collide with these plates or deflectors and fall onto the surface of the bed. Reverse V or pyramid-shaped deflectors are known; these devices reduce the entrainment of fine particles, but not of ultrafine particles, and so far, no device has been proposed which would prove to be truly effective in reducing the entrainment of fine and ultrafine particles for spouted bed contactors.

In other words, spouted bed technology has to overcome certain constraints in order to compete with the technologies that have been implemented commercially. The following are some of the issues that should be addressed:
- increase in scale, which involves dimensioning larger equipment that can handle larger quantities of particles. The operating ranges vary significantly depending on the feed to be treated. One application where the device of invention can be used is the drying of wet particles where it must compete with units with capacities of 40 tons/hour: In other words, the device of the invention is aimed at being able to be used in production conditions at an industrial level;
- ensure the stability of the regime in which the treatment of the particles in the contactor is carried out;
- prevent the segregation of particles; and
- minimise particle entrainment.

The stability of the regime in which the treatment is carried out makes it possible to ensure close contact between phases, that is, between the particles, which are in solid state, and the gas, which translates into greater efficiency. Particle segregation can reduce the efficiency of the process, and particle entrainment is a serious problem (mainly due to the cost for loss of reagent, catalyst or product, which must be replaced) when working with ultrafine particles, with mixtures of fine and coarse particles, e.g. in catalytic processes, in biomass drying or treatment of fine and ultrafine solids.

There are devices that slightly improve the behaviour of the spouted bed technology in terms of stability of the regime in which the process is carried out and particle entrainment, such as the central tubes installed in the bed to channel the flow of gas, or deflectors, installed at a certain height above the inlet channel to divert the particles entrained by the gas, respectively.

Continuing with stability and entrainment in spouted bed contactors, when working with irregularly textured materials such as agricultural-forestry waste, with mixtures of materials of different granulometry, adherent materials, and fine or ultrafine particles, problems related to particle entrainment or instability of the particle treatment regime (impossibility of obtaining a stable operating regime) arise. These two phenomena (entrainment and instability) are all the more serious and accentuated when the scale of the treatment is larger (that is, the greater the production parameters at an industrial level are, such as the dimensions of the contactor or the volumes or quantities of particles to be treated in a given time) because to reach these production capacities, large gas flows are required, in these conditions, the entrainment of fines, or fine particles (smaller particles), is accentuated. Consequently, for example, system instability in large plants can cause equipment damage due to sudden changes in the pressure drop in the gas flow as the gas passes through the bed, and adequate contact between the particles and the gas is not generated, reducing the efficiency of the treatment and increasing the operating cost of the plant.

The bed instability has been partially resolved by the inclusion of a variety of internal devices in the bed, consisting of central tubes that can have different configurations (continuous wall, with openings) and which are placed in the lower part, immersed in the particle bed. Despite the fact that these types of devices add substantial improvements, they do not prevent particle entrainment and do not achieve bed stabilisation under extreme conditions, as when operating with irregular materials, with very broad particle size distributions or when processing ultrafine particles. In addition, although the use of central tubes makes it possible to reduce the pressure drop in the gas flow that takes place in the bed and, consequently, a reduction in the gas flow required to reach the stable contact regime, it is associated with a reduction in the vigorousness of contact, which may be a limitation in some applications. It has been possible to observe qualitatively (visually) that vigour is reduced. Its consequences have been seen in processes such as drying where a single solid or "continuous wall" central tube does not generate enough movement and wet particles accumulate, eventually stopping the entire bed. On the other hand, the use of a single centre tube "with openings" generates vigorous levels that are in between those of the tubeless system and the continuous wall centre tube, approaching the values of the tubeless system depending on the percentage of openings used, as shown in Table 1. It is possible to measure one parameter that is directly related to vigour, which is the cycle time. The less time it takes for a particle to complete the entire cycle, the more vigorous the movement. This vigorousness can be quantified by measuring the downward flow of particles in the annular zone, this being a parameter directly related to vigorousness. The faster the flow, the more vigorous the movement of the bed will be. The average flow values for each type of pipe are shown in Table 1.

**Table 1. Particle flow (particle diameter dₚ, particle density ρ) for different internal tubes compared to the contactor without internal devices. Average values for glass balls (dp = 2 mm, ρ = 2400 kg/m³) and black peas (dp = 3.4 mm, ρ = 1230 kg/m³) from different experimental systems where different contactor angles (γ), different air inlets to the contactor (D₀) and different bed heights (H₀) were used. In addition, in the configuration with the central tube with openings, the percentage of opening of the tube wall (W_{H}) was varied and in the case of the central tube with a solid wall, the height of the legs (L_{H}) was changed.**

| **Configuration** | **Mass flow (kg/s)** | **Variation with respect to the maximum (%)** |
|---|---|---|
| No tube | 1.002 | 0 |
| Central tube with openings | 0.829 | -17 |
| Central tube with continuous wall | 0.512 | -49 |

As for the entrainment of particles by the upward flow of the gas, when working in different applications with fine and ultrafine particles, or mixtures of fine particles with others with a significantly larger particle diameter, the gas entrains the finest fraction of the particles with it to the outside. This results in a significant loss of bed material (up to 85% loss of fine particles), which means a significant additional replacement cost in the case of expensive materials such as catalysts or high value-added minerals, in addition to the need to include gas purification systems after the contactor's gas outlet to avoid the emission of particulate pollution.

### Description of the invention

In order to overcome the aforementioned limitations and to extend the range of application of the technology of contactors of fluidised beds, the use of an innovative internal device called a source confinement means, or, more briefly, confinement means, has been researched.

To achieve this, the invention proposes a source confinement device configured to improve the matter and energy transfer in fluidised bed contactors, especially when working with materials that are difficult to fluidise, that require a coadjuvant inert solid for proper fluidisation, with fine and ultrafine materials, where a large part of the fine particles are entrained to the outside, or with irregularly textured materials such as biomass, where problems are generated in the internal circulation of the solid on the bed.

In addition, using the proposed source confinement device, a stable gas-solid contact regime can be achieved with all types of materials, also avoiding the problems of particle entrainment. In addition, it promotes better contact between phases, that is, between the particles and the gas, which results in more energy-efficient processes, and makes it possible to optimise the residence time of the gas phase.

That is, the confinement means changes the operation of a contactor of a fluidised bed equipped with confinement means in comparison with the operation of a contactor of a fluidised bed without confinement means, since both the natural path of the gas and the particles in the contactor are modified. This change in the gas flow pattern and in the movement of particles has the following effects:
- A significant reduction in entrained particles (up to 90% in severe entrainment conditions depending on the type of central tube used, if it is used) and, therefore, an improvement in the flexibility of the fluidised bed technology in terms of solid particle size requirements.
   Losses due to entrainment depend on the size, gas flow, density of the particles and density of the gas itself at a given temperature.
   The size and density of the particles is determined by the type of product to be processed; the only variable that could be regulated would be the fluid flow, but the production that can be achieved depends on the flow of the fluid, so if the flow is limited to have reduce entrainment, production is limited. Therefore, all of the parameters that affect entrainment are predefined.
   In an example with a unit with 5 kg of sand from 0 to 0.8 mm particle diameter and 80 m³/h of air at room temperature without confinement means, in 5 min, the bed has been reduced to 0.5 kg, in other words, there had been a loss of 4.5 kg, while with confinement means, after 8 h, the bed was still 4.7 kg, that is, there was a loss of 0.3 kg.
   In another example with even finer sands (<0.1 mm) the bed was emptied completely without confinement means and after 8 hours with confinement means 4 kg remained.
   In short, the confinement means was found to substantially reduce pressure drops and even makes it possible to carry out processes that are unviable without confinement means, by using a contactor that is equipped with confinement means. In other words, there are processes that are made possible by the confinement means, that would otherwise be impossible to carry out, other processes that would be possible without confinement means, but with very, very small airflow/production values.
   In addition, in processes such as combustion or pyrolysis, it reduces the entrainment of ash and unburned particles, because during combustion or pyrolysis there is a reduction in particle size (as well as a change in particle properties) as the particle burns, which means that ash is much more volatile and can entrain with the air more easily. Until now, plates or deflectors have normally been placed on the source at the gas inlet to the contactor so that the particles entrained in the gas collide with these devices and fall to the surface of the bed. These devices partially minimise the entrainment of fine particles but not of ultrafine particles, so there is no device on the market that is really effective in reducing the entrainment of fine and ultrafine particles for spouted bed contactors. It is for this reason that the source confinement means of the invention represent a great advance in this field, because it reduces entrainment of these particles by up to 90%, making it possible to expand the spectrum of application of spouted bed technology to materials that were previously inaccessible.
- A drastic reduction in bed segregation, a more uniform particle mixture is achieved by homogenising the circulation of particles in the bed, which makes the process more efficient. This effect is highly beneficial in processes in which the homogenisation of materials is critical, such as mixing or chemical reactions.
   This feature is inherent in the design of the confinement means itself, because its inner wall limits the width of the source, cutting the longer paths, so all of the particles fall onto the bed at most to the radius of the confinement means from the centre.
   It has been observed in trials that the difference between the most peripheral and the most central zone is less noticeable than in a process carried out in a contactor without confinement means. Using techniques such as sand colouring, it has been observed that the sand is mixed much better throughout the bed in a contactors with confinement means than in contactors without confinement means.
   Normally, the density of the particles has an impact, but generally the beds are always made up of the same type of particles (the same material) and differ only in size from one particle to another. In processes in which there are two materials, generally one is an inert, with a much larger particle size, and it is intended to remain in the bed, and the other is reactive, or a material to be treated that is entrained out. In those cases, entrainment is sought for the finest particles and the beneficial effect of the confinement means is applied to the inert particles, preventing the loss of the inert material by entrainment.
- A substantial improvement in the stability of the particle treatment regime, especially with particles that are difficult to fluidise, which makes it possible to stabilise beds that are unstable without the confinement means. That is, the confinement means of the invention, allows stable operation with a wide range of particles, including particles of group A, B and D of the Geldart classification, and particles with highly irregular texture. In addition, the problems of internal circulation of the solids in the bed are avoided. Its stabilising capacity allows, in some cases, operation even without a central tube or any other type of internal device other than those proposed and used up to this point to facilitate fluidisation, such as draft-plates and draft-tubes among others and, consequently, simplifying and lowering the costs of manufacturing, assembly and maintenance.
In addition, the source confinement means has been observed to provide the following advantages:
- The vigorousness of the gas-solid contact is improved, which in turn leads to an improvement in the performance of physical and chemical processes. The confinement means makes the gas, once separated from the solid at the top, cusp or apex of the source, to circulate downward, so it produces additional contact between the gas and the solid during the downward travel (whereas without confinement means, there is only contact during the upward travel), significantly improving the efficiency of physical and chemical processes.
   That is, the confinement means improves contact, or generates additional contact, between the solid particles and the fluid in the upward and downward streams. In a contactor without confinement means, the particles, once they have passed through the surface of the bed, fall by gravity. In a contactor equipped with confinement means, the particles descend much faster by the downward current, and there are even particles that are entrained again by the upward current in the confinement means itself. In a contactor with confinement means, the descending air comes into contact with the bed again and forces the particles to descend in the bed, increasing the descent velocity of the annular zone. All of this makes the movement faster and more vigorous.
- The residence time of the gas increases, since the gas-solid contact path is doubled by incorporating the downward gas section, and in addition, the residence time can be regulated.
   The residence time can be increased by extending the length of the confinement means, either by replacing it or by adding additional confinement means sections. One possible way to add additional confinement means sections to increase their length is to connect these additional sections together using flanges.
   This feature improves efficiency in physical and chemical processes and is interesting in reactive processes, helping to achieve a complete reaction, for example in chemical processes such as pyrolysis or combustion, in which optimisation of the residence time of the gas is sought in order to achieve a certain distribution of products, to reduce the emission of harmful and/or unburned gases and to limit the extent of secondary reactions.
   In processes such as pyrolysis, the degradation of the reagent is a function of the residence time of the gas, so it is advantageous to prolong the residence time of the gas.
   In processes such as pyrolysis and combustion, extending the residence time of the gas also promotes complete combustion. By increasing the likelihood that combustion will be complete, the release of harmful gases such as carbon monoxide (CO) is reduced and the extent of secondary reactions is limited.
- It reduces operating pressure drop, reducing the energy consumption of gas delivery or allowing the installation of smaller gas supply units. Although a new pressure drop appears because the gas has to follow a more twisting path within the contactor, first ascending and descending in the confinement means, and then ascending through the contact chamber to the contactor's exit, the reduction in the pressure drop at the gas inlet to the contactor, when the gas passes through the bed, due to the obstruction of the particles at the gas inlet to the contactor, is of greater magnitude than the increase in the pressure drop due to the change in the path of the gas inside the contactor. That is, the reduction of the pressure drop in the gas flow due to the reduction of the clogging of the particles at the inlet to the contactor due to the action of the confinement means, is of an order of magnitude greater than the increase in the pressure drop in the gas flow due to the change in the path followed as it passes through the confinement means.
- It makes it possible to reduce the height of the source. The confinement means imposes a maximum height for the source, which, especially in the case of ultrafine particles, makes it possible to build more compact equipment. A contactor with the confinement means of the invention fluidises particles below the boundary between Geldart particles B and D, while in a contactor without confinement means, spouted bed is achieved only for larger particle sizes.
- It makes it possible to shorten the cycle time, which is the same as increasing the circulation flow of the particles. This reduction in cycle time is achieved by the higher speed of the descending particles in the confinement means and annular zone, the latter is also caused by the downward stream that pushes the bed downwards. With a suitable confinement means length, the device forces the particles to carry out cycles in shorter times, which is a benefit for processes in which thermosensitive materials are treated, since the cycle is carried out in a shorter time.

As described above, a first aspect of the invention refers to a source confinement means for a contactor of fluidised bed where the contactor has a series of components: a bed of particles; a gas inlet for particle treatment; a gas outlet after particle treatment and a contact chamber configured to permit contact between the gas and particles. The confinement means comprises a peripheral wall configured to form an internal cavity in the contact chamber. The cavity has an opening facing the inlet and the bed, configured to direct an inlet and outlet of gas and particles via the opening. Gas and particles enter the cavity in an ascending direction, while the exit of gas and particles from the cavity occurs in the descending direction.

As can be observed, the confinement means has the function of covering or coating the source, preventing the source from exceeding the limits established by the cavity: that is, the confinement means forms an internal enclosure to the contact chamber acting as a skirt, enclosure, screen, hood or bell, where the source can form and grow to the limits imposed by the dimensions of the confinement means, which constitutes a boundary on the growth of the source. The contactor in which the confinement means is installed has an inlet for the gas for the treatment of the particles and an outlet for the gas after the treatment of the particles. The cavity forms a space within which the source can grow until it reaches the limits defined by the confinement means; if there were no confinement means, the source could grow to the limits imposed by the contact chamber. Consequently, the geometry of the confinement means creates a volume inside the contact chamber where a first effect is promoted to improve the contact between the gas and the particles, by increasing the contact time between the gas and the particles. The increased contact time between the gas and particles occurs because the gas and particles cannot spread beyond the boundaries established by confinement means, so both the gas and the particles stay in the this enclosure longer (if there was no confinement means, a point would be reached when the gas would follow its upward path and the particles would separate from the path initially followed by the gas). In addition, the volume of the cavity is smaller than that of the contact chamber, so in addition to increasing the duration of contact between the gas and particles, a second effect is generated to improve the contact between the gas and the particles, because the contact between the gas and the particles is more intense. That is, the confinement means cavity has a synergistic effect on the gas-solid contact, improving this contact not only by increasing the duration of the contact between the gas and the particles, but also by promoting a greater degree of contact by decreasing the volume in which the gas-solid interaction takes place, thus generating a qualitative improvement of the gas-solid contact. And there is yet a third effect related to gas-solid contact, since the confinement means also promotes additional contact between the gas and the particles that are on the surface of the bed, when the gas exits the confinement means via the opening, being in the descending direction and collides with the bed to, lastly, ascend to the contactor outlet.

In addition, the confinement means also provides a fourth effect, as it decreases the entrainment of particles beyond the desired limits, making it difficult for the gas to carry particles to the outlet, which would require the inclusion of devices to recover these particles entrained out of the contact chamber, as is necessary in contactors without the confinement means of the invention. The confinement means encourages the particles to fall back onto the bed, by forming a barrier in the path of the gas between the inlet and the outlet. Particles leave the confinement means via the opening in the descending direction and fall onto the bed, because the gas cannot entrain the particles because the gravitational forces are higher than the entrainment forces.

According to a feature of the invention that is compatible with all of the embodiments of the confinement means, the opening is located at a distance H_{G} from the bed. This distance H_{G} is a parameter that influences the operation of the confinement means and, consequently, the operation of the contactor of a fluidised bed or spouted bed. For example, it has been proven that when operating with irregular low-density materials such as biomass, a minimum distance or height H_{G} must be left to avoid the creation of craters on the surface of the bed, which ensures the stabilisation of the operating regime of the contactor with the confinement means and homogenises the circulation of the solid in the bed. During operation of the contactor, at the beginning of particle treatment, the bed expands, so the distance between the confinement means and the surface of the bed depends on the solid material to be treated, in any case preventing that the confinement means from entering the bed. In addition, there is also a maximum value of height H_{G} after which the effect of the confinement means decreases and at which the aforementioned benefits are no longer obtained. Thus, the distance H_{G} between the confinement means and the bed is comprised between 3 cm and 4 times the diameter of the inlet to the contactor Do. 4. Preferably, the distance H_{G} is comprised between 1.5-2.5 times the inlet diameter. 5. Even more preferably, the distance H_{G} is approximately 2 times the diameter of the inlet to the contactor Do.

According to another feature of the invention that is compatible with the rest of the features of the confinement means, the cavity is tubular in shape. In the invention, tubular shape refers to the form of a tube, which is a hollow piece, commonly cylindrical and open at one end. On one hand, the tubular shape is the easiest to manufacture. On the other, the tubular shape is the one that alters the formation of the source the least.

According to another feature of the confinement means, the cavity is cylindrical in shape and has a diameter D_{G}. A variation in the diameter D_{G} slightly changes the functioning of the confinement means. The confinement means must be at least as wide as necessary to confine the entire source, that is, the confinement means is an enveloping element of the source, and it must be taken into account that the size of the source depends on the specific parameters of each installation and the central tube used, in such case. Thus, the diameter D_{G} is comprised between 3 times the diameter of the inlet to the contactor Do and 0.7 times the diameter of the cylindrical zone of the contactor Dc. Preferably, the diameter D_{G} is comprised between 4 and 6 times the diameter of the inlet to the contactor Do. 10. Even more preferably, the diameter D_{G} is approximately 5 times the diameter of the inlet to the contactor Do.

According to another feature of the invention that is compatible with the rest of the features of the confinement means, the confinement means comprises a blank cover on an upper part. When the confinement means is positioned from an upper wall of the contactor, that is, when the peripheral wall of the confinement means starts from the upper wall of the contactor, a blank cover on the upper part is not required, since the upper wall of the contactor itself prevents the gas and particles from exiting the upper part of the contactor. In case of a different placement of the confinement means with respect to the contactor, for example in the case of confinement means that is not attached to the upper wall of the contactor, the confinement means has a blank cover at the top to prevent the source from overflowing the confinement means at the top edge. Consequently, the blank cover on the upper part of the confinement means forces the gas and particles to exit via the opening by redirecting them towards the bed.

If the confinement means has a blank cover on the upper part, the confinement means may be movable between a lower position and a higher position to bring the confinement means opening closer and further away from the surface of the bed, with the opening at a displaced distance H_{G'} equal to or greater than the distance H_{G}, when the confinement means is in the lower position. This configuration in which the confinement means can be moved vertically between a lower position and an upper position to position the opening at different heights from the bed has the advantage of being able to adjust the distance H_{G}. This regulation of the distance between the bed and the confinement means makes it possible to find the optimum operating point for each process, because it makes it possible to achieve a fine adjustment of the distance H_{G} based on an initial estimate, since the actual optimal operating value of the installation may differ from the initially estimated value.

A second aspect of the invention relates to a contactor of a fluidised bed that comprises confinement means as described above. According to a feature of the contactor, the cavity is positioned with respect to the gas inlet such that: the inlet for gas and particles into the cavity in the ascending direction takes place in a central zone of the opening; the outlet for gas and particles from the cavity in the descending direction takes place in a peripheral zone of the opening. According to another feature of the contactor, the gas inlet comprises a tube configured to channel a gas from the bed to an interior of the contactor.

As indicated above, the good functioning of the fluidised bed has been proven in many applications, including pyrolysis and gasification of tires, plastics and biomass, drying of aggregate, vegetable grains, pastes and emulsions, coating with iron powders, catalytic reforming for hydrogen production, the combustion of bituminous coal and waste and forest biomass, and catalytic polymerisation reactions, granulation or coating. In all of these processes, spouted bed technology has proven to be very competitive in comparison with established technologies, mainly due to its high energy efficiency, to the better control of the operation and to the lower gas flow pressure drop.

However, spouted bed technology has certain limitations in these applications due to the granulometry of the particles to be treated, and this is where the use of a source confinement means has made significant contributions. In processes with fine particles or those in which it is necessary to work with mixtures of fine and coarse particles, the gas flow required to achieve stable fluidisation generates noticeable particle entrainment. In addition, very high nominal production capacities are required in most industrial processes, and these are only attainable with large gas flows, conditions in which the entrainment of fines is accentuated. In all these cases, the inclusion in the contact chamber of confinement means expands the range of operating conditions of the technology.

In addition, the source confinement means significantly improves the performance of the operation, and therefore makes it even more competitive in all the applications in which it has been tested, because it increases the residence time of the gas and solid and therefore improves contact.

Consequently, the advantages of the source confinement means of the invention are approached from two points of view.
1) First, it allows the operator to improve its competitiveness for two main reasons:
   - Penetration into new sectors or expansion of the current field of application. It allows the use of spouted bed technology to treat fine and ultrafine materials, which are currently processed with other less efficient technologies. For example, drying of clays or solids with a high clay content, the drying of fine granular food products such as flour, drying of graphene powder, chemical reactions such as catalytic reforming or polymerisation, the combustion of certain types of biomass or the mixture of recycled aggregate, among others.
   - The required investment and/or operating cost for the implementation of this technology is lower than what is required for conventional technology (for example, fluidised bed, rotating drum or belt technology, among others) which would allow it to gain market share.
2) Second, the incorporation of this technology into industry would reduce the environmental impact of the processes that implement it, because it would improve the energy efficiency of the processes. This in turn leads to a reduction in energy consumption for the company.

In addition, the industrial application of this technology would promote sustainable development because it would make it possible to recover waste more efficiently than with other technologies (e.g., pyrolysis of tires).

Consequently, as described above, the source confinement means is a device designed for installation in contactors with spouted bed technology, which minimises particle entrainment, improves the stability of the spouted bed operating regime, reduces the segregation of particles in the bed, and allows it to operate efficiently with fine particles, improving the vigorousness of the contact between phases, that is, between the particles and the gas. These features make it possible to produce a more compact and versatile unit, increasing the competitiveness of spouted bed technology in comparison with existing technologies.

### Brief description of the drawings

To complement the description provided below, and for the purpose of helping to make the features of the invention more readily understandable, according to a practical exemplary embodiment of it, this description is accompanied, as an integral part of it, by a set of drawings which, by way of illustration and not limitation, represent the following:
Figure 1 shows the geometrical form of a first embodiment of the source confinement device.
Figures 2A to 2D show different views that illustrate a form of placement of the first embodiment of the confinement device in a contactor of a fluidised bed or spouted bed. Figure 2A is an external elevation view of the contactor; Figure 2B is a longitudinal cross-section of the contactor; Figure 2C is a perspective view of the contactor with a one-quarter cross-section; Figure 2D is an external perspective view of the contactor.
Figure 3 shows the paths of the solid as a double line and the path of the gas with a single line in a contactor of a fluidised bed with a conical bottom with a second embodiment of the confinement means according to the invention.
Figure 4 shows dimensions of the shape and placement of the second embodiment of the confinement means of the invention in a spouted bed contactor. Figure 4 shows the diameter D_{G} of the confinement means, and the height H_{G} above the surface of the bed where the opening in the lower part of the confinement means is located.

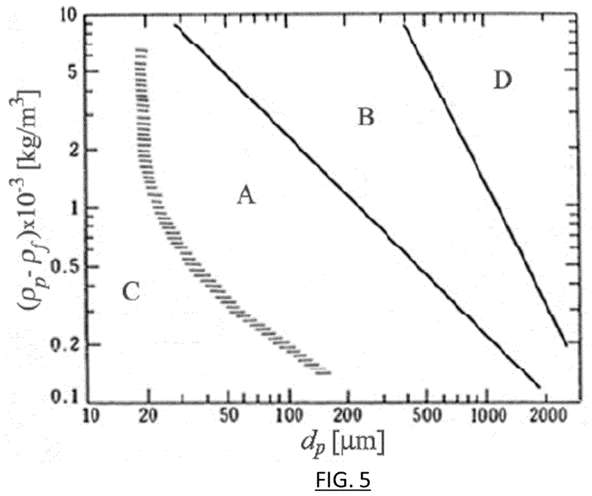

Figure 5 shows a graph with the particle classification for air fluidisation (Geldart particle classification). The abscissa axis shows the particle diameter dₚ in µm, and on the ordinate axis, the difference between the density of the particle (ρₚ) and the density of the fluid (pf) in 10-3 kg/m³.

The main elements of the invention are listed below:
Confinement means 1
Cavity 11
Peripheral wall 12
Opening 13
Columns 100
Contactor 2
Inlet 21
Outlet 22
Contact chamber 23
Bed 3
Source 4
Central tube 5
Diameter D_{G} of the confinement means 1
Diameter of the inlet to the contactor Do
Diameter of cylinder D_{c}
Distance H_{G} between the bed 3 and the confinement means 1
Displaced distance H_{G'} between the bed 3 and the movable confinement means 1
Bed height (H₀)

### Description of an embodiment of the invention

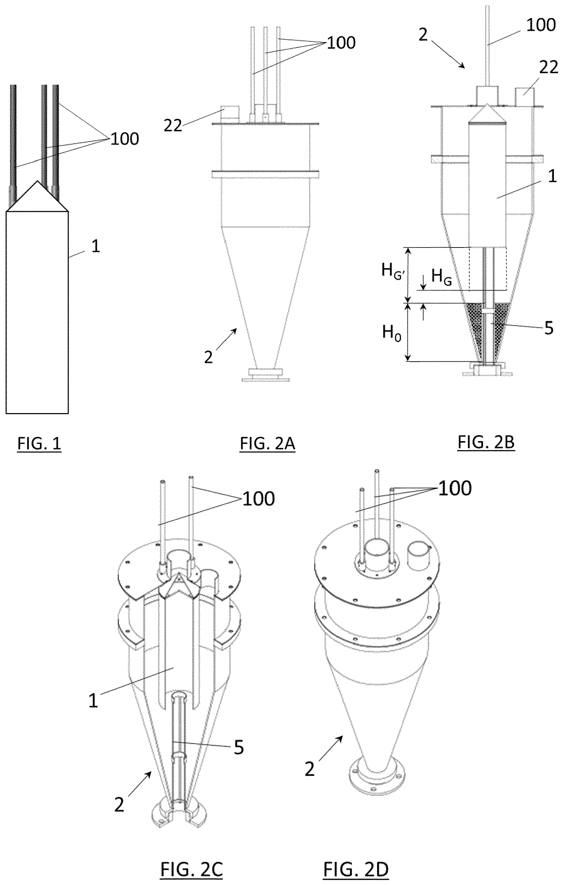

Figure 1 illustrates a first embodiment of a source 4 confinement means (1) according to the invention. The confinement means (1) illustrated in figure 1 has a lateral wall that is substantially cylindrical, a conical top blank cover and a circular lower opening (13). In this embodiment with a conical top blank cover and a circular lower opening (13), the opening (13) is the only access to the cavity for both intake and outlet. The confinement means (1) in figure 1 comprises a means to be displaced axially in the interior of a contactor (2) in which it can be installed. Figure 1 illustrates these means to be displaced axially formed by three vertical columns 100 that start from one exterior side of the conical top blank cover. In the embodiment shown in figure 1, the three columns 100 are parallel to each other and parallel to the longitudinal axis of symmetry of the confinement device (1). Figure 2D illustrates the angular distribution of the columns 100, which are distributed uniformly in radii that form 120° between each other.

Figures 2A to 2D show the source (4) confinement device (1) of figure 1 installed in a contactor (2). The contactor (2) has a lateral wall that is substantially cylindrical, a top blank cover that comprises the outlet (22) and a conical lower part that is convergent downwards. The contactor (2) in figures 2A to 2D comprises a central tube (5) aligned axially with the confinement device (1). In the embodiment of the confinement means illustrated in figures 2A to 2D, the confinement means (1) are positioned concentrically with respect to the contactor (2) and is projected from the upper internal part of the contact chamber (23) towards the lower part of the contactor (2). In this embodiment of the confinement means shown in figures 2A to 2D, the height of the confinement means (1) above the bed (3) is adjustable, that is, the confinement means (1) can be displaced vertically between an upper position and a lower position within the contactor (2) by means of a lifting unit. In the embodiment of the confinement means illustrated in figures 2A to 2D, the following features are shown. The contactor comprises two main parts, an upper part and a lower part. The upper part is cylindrical and is attached to the lower part, which has a cylindrical zone joined to the upper part by a flange. The lower part has a truncated cone zone that converges towards the bottom of the contactor. As shown in figures 2B and 2C, the central tube (5) can penetrate the confinement means (1). In figure 2B, the opening 13 of the confinement means is at a lower level than the level of the connection between the truncated cone zone and the cylindrical zone of the lower section of contactor (2). These configurations are recommended especially when lowering of the height of the source is required.

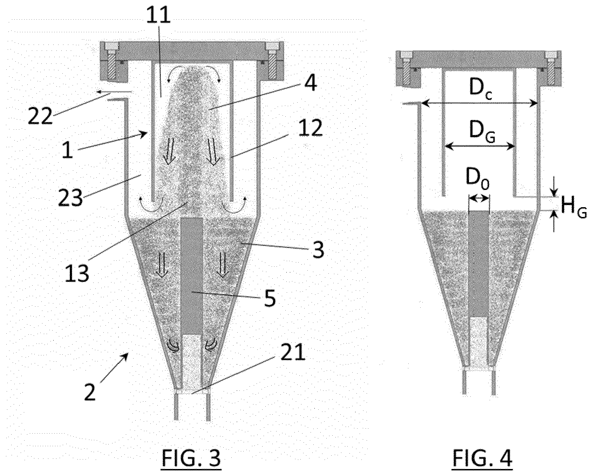

Figure 3 illustrates a second embodiment of a source (4) confinement means (1) installed in a contactor (2). The source (4) confinement device (1) illustrated in figure 3 comprises a cavity (11) with the upper part covered by a flat cover. This cover could have a different shape, for example, as a cone (as shown in figures 1 and 2), semisphere or pyramid. In the embodiment shown in figure 3, the confinement means (1) would not need to have a cover, since the side walls start directly from the top cover of the contactor (2), so neither the gas nor the particles can leave the confinement means (1) through the top of confinement means (1), but rather must descend through the interior of the confinement means (1) in order to, in the case of the gas, move around the lower edge of the confinement means (1) when exiting via the opening (13) and pass to the contact chamber (23), from where it ascends until it exits the chamber through the exit (22) and, in the case of particles, fall back onto the bed (3) when exiting via the opening (13). In this embodiment in which the side walls start directly from the top cover of the contactor (2), the opening (13) is the only access to the cavity for both intake and outlet.

Figure 3 illustrates the trajectories of the gas and the particles, showing that the confinement means (1) changes the path of the gas in the contactor (2), because once the gas reaches the top of the confinement means (1), it is forced to descend and pass through the space between the lower part of the confinement means (1), that is, between the opening (13) and the surface of the bed (3). With this arrangement of the confinement means (1), cavity (11) confines, on one hand, the feature source (4) in a stable system of gas-solid contact that is generated by the particles when the gas stream enters the lower part of contactor (2) and drives the particles and, on the other, it acts to direct the gas stream inside the confinement means (1); the gas stream, after entering the cavity (11) via the opening (13), follows an ascending section through the cavity (11), reaches the upper part of confinement means (1) and is diverted to initiate a downward section to exit the cavity (11), once again via the opening (13). Consequently, the confinement means (1) changes the operation of a spouted bed in stable operation:
(a) on one hand, the path of the gas in the contactor (2) is extended: whereas in a contactor without confinement means, the gas only follows an upward path from the inlet to the contactor through the lower part, to the contactor outlet through the upper part, in a contactor equipped with confinement means, the gas follows a path with a first ascending section, into the confinement means, a second downward section, to exit the confinement means, and lastly, a third ascending section, to exit the contactor;
(b) on the other hand, the particles also follow different paths in a contactor equipped with confinement means and in a contactor without confinement means: while in a contactor without confinement means they are entrained by the gas towards the contactor outlet, in a contactor equipped with confinement means, the particles are entrained by the gas stream in the first ascending section into the confinement means and then fall onto bed (3) via the opening (13), but they are not entrained again by the gas in the third ascending section when it leaves the contactor.

Figure 4 shows the diameter D_{G} of the confinement means (1), the diameter of the inlet to the contactor Do, the diameter of the contactor's cylinder Dc and the distance or height H_{G} between the opening (13) and the surface of the bed (3) for the same embodiment of the confinement means (1) illustrated in figure 3.

In the embodiment of the contactor with the confinement means illustrated in figures 3 and 4, the following features are shown. The contactor (2) has a body with a substantially cylindrical zone and a conical lower zone. The upper cover of the contactor (2) is flat and the outlet (22) is on the cylindrical wall of the contactor. The lower zone has a truncated cone part that converges towards the bottom of the contactor. As can be seen in figures 3 and 4, the central tube (5) does not reach the opening (13) of the confinement means (1). In figures 3 and 4, the opening (13) of the confinement means is at a higher level than the level of the connection between the truncated cone zone and the cylindrical zone of the body of contactor (2). These configurations are particularly suitable when the entrainment of extremely fine particles is not a problem.

The reduction of pressure drop in the gas flow, and the height of the source (4) favoured by the confinement means (1) translate into a more stable process and reduce the differences in the performance of three possible types of systems: spouted beds without central tube, with a non-porous central tube and with a central tube with openings.

In one embodiment of the invention, confinement means (1) being 0.9 m long and having a diameter of 0.2 m has been installed in a pilot sand drying plant, positioning it by means of a guiding system that holds the confinement means (1) and allows its distance or height H_{G} to the surface of the bed (3) to be varied as illustrated in figures 2A-2D. With the contactor (2) equipped with the confinement means (1) of the invention, fine and ultrafine materials that without the confinement means (1) would not reach the spouted bed regime have been processed. A stable regime has been achieved without the need to incorporate additional internal elements in the bed (3) such as tubes (5) or draft-plates and draft-tubes to achieve the stable regime and with a drop in pressure in the gas flow similar to the drop obtained in a contactor that does incorporate these additional elements in the bed, as illustrated in tables 2A and 2B.

**Table 2A. Comparison of the pressure drop in the gas flow for different internal element configurations. Average values for glass balls (dp = 2 mm, ρ = 2400 kg/m³) and black peas (dp = 3.4 mm, ρ = 1230 kg/m³) from different experimental systems where different contactor angles (γ), different air inlets to the contactor (D₀) and different bed heights (H₀) were used. In addition, in the configuration with the central tube with openings, the percentage of opening of the tube wall (W_{H}) was varied and in the case of the central tube with a solid wall, the height of the legs (L_{H}) was changed.**

| | ΔPₛ (Pa) | |
|---|---|---|
| | Without confinement means | With confinement means |
| Without central tube | 2410 | 2190 |
| With central tube with openings | 2170 | 1850 |
| With non-porous central tube | 1340 | 1210 |

**Table 2B. Comparison of the pressure drop in the gas flow for different internal element configurations. Values for glass balls (dp = 2 mm, ρ = 2400 kg/m³) and black peas (dp = 3.4 mm, ρ = 1230 kg/m³).**

| | ΔPₛ (%, variation with respect to the maximum) | |
|---|---|---|
| | Without confinement means | With confinement means |
| Without central tube | 0 | -9 |
| With central tube with openings | -10 | -23 |
| With non-porous central tube | -45 | -50 |

As shown in table 2A, comparing the values of the pressure loss that occurs in installations with and without confinement means, in all cases, there is less pressure drop in installations with confinement means. In table 2B, it can be observed that the reduction of the pressure drop depending on the type of installation (without central tube, with central tube with openings, with non-porous central tube) is also enhanced by the installation of the confinement means.

In addition, fine particle retention efficiencies of up to 90% were achieved, which allows the dryer to improve its competitiveness in comparison with conventional dryers and, especially, in comparison with its immediate competitor, the fluidised bed.

In this text, the word "comprises" and its variants (such as "comprising", etc.) are not to be interpreted in an exclusive manner, that is, they do not exclude the possibility that what is described includes other elements, steps etc.

In addition, the invention is not limited to the concrete embodiments that are described, but rather also encompasses, for example, variations that may be made by the average person skilled in the art (for example, in regard to the choice of materials, dimensions, components, configuration etc.), within what is described in the claims.

## Claims

1. A source (4) confinement means (1) for a contactor (2) of a fluidised bed (3) in which the contactor (2) comprises:
1a) a particle bed (3);
1b) an inlet (21) for gas for the treatment of the particles;
1c) an outlet (22) for the gas after the treatment of the particles;
1d) a contact chamber (23) configured for permitting contact between the gas and particles;
**characterised in that** the confinement means (1) comprises:
1e) a peripheral wall (12) configured to form a cavity (11):
1e1) inside the contact chamber (23);
1e2) which has an opening (13) facing the inlet (21) and the bed (3), configured to direct an inlet and outlet of gas and particles via the opening (13) with:
1e2a) the inlet for gas and particles into the cavity (11) being in an ascending direction;
1e2b) the outlet for gas and particles from the cavity (11) being in a descending direction.

2. The source (4) confinement means (1) for a contactor (2) of a fluidised bed (3) according to claim 1, **characterised in that** the opening (13) is positioned at a distance H_{G} from the bed (3).

3. The source (4) confinement means (1) for a contactor (2) of a fluidised bed (3) according to claim 2, **characterised in that:**
3a) the inlet (21) has an inlet diameter to the contactor Do;
3b) the distance H_{G} between the opening (13) and the bed (3) is comprised between 3 cm and four times the diameter of the inlet to the contactor Do.

4. The source (4) confinement means (1) for a contactor (2) of a fluidised bed (3) according to claim 3, **characterised in that** the distance H_{G} between the opening (13) and the bed (3) is between 1.5 and 2.5 times the diameter of the inlet to the contactor Do.

5. The source (4) confinement means (1) for a contactor (2) of a fluidised bed (3) according to claim 4, **characterised in that** the distance H_{G} between the opening (13) and the bed (3) is substantially 2 times the diameter of the inlet to the contactor Do.

6. The source (4) confinement means (1) for a contactor (2) of a fluidised bed (3) according to any of the claims 1-5, **characterised in that** the cavity (11) has a tubular shape.

7. The source (4) confinement means (1) for a contactor (2) of a fluidised bed (3) according to any of the claims 1-6, **characterised in that** the cavity (11) has a cylindrical shape with diameter D_{G}.

8. The source (4) confinement means (1) for a contactor (2) of a fluidised bed (3) according to claim 7, **characterised in that:**
8a) the contactor has a cylindrical area with a cylinder diameter Dc;
8b) diameter D_{G} is comprised between 3 times the diameter of the inlet to the contactor Do and 0.7 times the cylinder diameter Dc.

9. The source (4) confinement means (1) for a contactor (2) of a fluidised bed (3) according to claim 8, **characterised in that** the diameter D_{G} is comprised between 4 and 6 times the diameter of the inlet to the contactor Do.

10. The source (4) confinement means (1) for a contactor (2) of a fluidised bed (3) according to claim 9, **characterised in that** the diameter D_{G} is substantially 5 times the diameter of the inlet to the contactor Do.

11. The source (4) confinement means (1) for a contactor (2) of a fluidised bed (3) according to any of the claims 1-10, **characterised in that** the confinement means (1) comprises a blank cover on a top part.

12. The source (4) confinement means (1) for a contactor (2) of a fluidised bed (3) according to claim 11, **characterised in that** the confinement means (1) can be moved between a lower position and an upper position, with the opening (13) being at a displaced distance H_{G'} greater than or equal to the distance H_{G}, when the confinement means (1) are in the lower position.

13. A contactor (2) of a fluidised bed (3), **characterised in that** it comprises confinement means (1) according to any of the preceding claims.

14. The contactor (2) of a fluidised bed (3) according to claim 13, **characterised in that** the cavity (11) is located with respect to the inlet (21) such that:
14a) the inlet for gas and particles into the cavity (11) in the ascending direction occurs in a central zone of the opening (13);
14b) the outlet for gas and particles from the cavity (11) in the descending direction occurs in a peripheral zone of the opening (13).

15. The contactor (2) of a fluidised bed (3) according to claim 14, **characterised in that** the inlet (21) comprises:
15a) a tube (5) configured to channel a gas from the bed (3) towards an interior of the contactor (2).
